# EUROPÄISCHE PATENTSCHRIFT

(11) **EP 3 862 938 B1**
(45) Veröffentlichungstag und Bekanntmachung des Hinweises auf die Patenterteilung: **18.09.2024**
(21) Anmeldenummer: 21154556.1
(22) Anmeldetag: 01.02.2021
(51) Int. Cl.: G06Q 10/04, G06Q 10/06

(54) **VERFAHREN ZUM BETRIEB EINES REINIGUNGSSYSTEMS**
METHOD FOR OPERATING A CLEANING SYSTEM
PROCÉDÉ DE FONCTIONNEMENT DOTÉ D'UN SYSTÈME DE NETTOYAGE

(30) Priorität: 04.02.2020 DE 102020102766
(43) Veröffentlichungstag der Anmeldung: 11.08.2021
(73) Patentinhaber: Vorwerk & Co. Interholding GmbH, 42275 Wuppertal (DE)
(72) Erfinder: Papenheim, Marc, 42349 Wuppertal (DE); Mosebach, Andrej, 59425 Unna (DE)
(74) Vertreter: Müller, Enno

(56) Entgegenhaltungen:
- EP-A1- 3 415 070
- DE-A1- 102016 108 513

## Beschreibung

### Gebiet der Technik

Die Erfindung betrifft ein Verfahren zum Betrieb eines Reinigungssystems, welches zumindest ein sich selbsttätig fortbewegendes Reinigungsgerät aufweist, wobei sich das Reinigungsgerät in einer Umgebung auf der Basis einer Umgebungskarte fortbewegt und dort Reinigungstätigkeiten ausführt, wobei das Reinigungsgerät auf eine Datenbank zugreift, in welcher mehrere in zumindest einem Umgebungsteilbereich der Umgebung auszuführende Reinigungstätigkeiten gespeichert sind, wobei ein Nutzer auf die Datenbank zugreift und im Voraus zumindest ein zufällig eintretendes, einen Reinigungszustand zumindest eines Umgebungsteilbereiches veränderndes Ereignis definiert, in Abhängigkeit von dessen Eintreten zumindest eine bestimmte Reinigungstätigkeit in zumindest einem bestimmten Umgebungsteilbereich ausgeführt werden soll, wobei der Nutzer zu dem definierten Ereignis im Voraus, nämlich vor Eintreten des Ereignisses, ein ereignisabhängiges Tätigkeitsszenario definiert, welches eine festgelegte Zuordnung einer bestimmten auszuführenden Reinigungstätigkeit zu einem bestimmten Umgebungsteilbereich, in welchem die Reinigungstätigkeit ausgeführt werden soll, enthält, und wobei das Tätigkeitsszenario bei späterem Eintreten des definierten Ereignisses von zumindest einem Reinigungsgerät ausgeführt wird.

### Stand der Technik

Reinigungssysteme mit einem oder mehreren sich selbsttätig fortbewegenden Reinigungsgeräten sind im Stand der Technik bekannt. Bei den Reinigungsgeräten kann es sich beispielsweise um Saugroboter, Wischroboter, Polierroboter oder Ähnliches handeln. Die Reinigungsgeräte weisen beispielsweise Reinigungselemente wie Bürsten, Wischelemente, Polierelemente oder Ähnliches auf. Des Weiteren ist es bekannt, derartige Reinigungsgeräte automatisch zu steuern, um Reinigungstätigkeiten auszuführen, bei welchen das Reinigungsgerät eine Fläche reinigt.

Es ist des Weiteren bekannt, mehrere sich selbsttätig fortbewegende Reinigungsgeräte innerhalb eines Systems zu betreiben, wobei eine gemeinsame Datenbank zur Verfügung steht, in welcher Reinigungstätigkeiten für eines oder mehrere Reinigungsgeräte gespeichert sind. Die EP 3 415 070 offenbart sein System zur Steuerung von mehreren Bodenbearbeitungseinrichtungen, die vordefinierten Pläne abarbeiten.

Die DE 102017113288 A1 (auch veröffentlicht als US 2018/0361569 A1) offenbart ein System mit mehreren Reinigungsgeräten zur automatisch gesteuerten Bearbeitung einer Fläche, wobei eine den Reinigungsgeräten gemeinsam zugeordnete Datenbank nach definierten Regeln geplante Reinigungstätigkeiten für die Reinigungsgeräte aufweist. Die Reinigungstätigkeiten werden von einer zentralen Recheneinrichtung des Systems automatisch geplant, beispielsweise in Abhängigkeit von einer durch ein Reinigungsgerät detektierten Verschmutzung eines Teilbereiches einer Fläche.

Die DE 10 2016 108 513 A1 offenbart ein Reinigungssystem, bei welchem ein Nutzer im Voraus Ereignisse definiert, die mindestens eine Reinigungstätigkeit auslösen.

### Zusammenfassung der Erfindung

Ausgehend von dem vorgenannten Stand der Technik ist es Aufgabe der Erfindung, ein solches System mit mindestens einem sich selbsttätig fortbewegenden Reinigungsgerät vorteilhaft weiterzubilden.

Zur Lösung der vorgenannten Aufgabe wird vorgeschlagen, dass das Eintreten des definierten Ereignisses mittels einer Detektionseinrichtung detektiert und dem System automatisch mitgeteilt wird, wobei eine Steuereinrichtung des Systems ein zu dem mitgeteilten Ereignis definiertes Tätigkeitsszenario aus der Datenbank abruft und die Ausführung der zumindest einen davon umfassten Reinigungstätigkeit steuert, wobei der Nutzer eine Zuordnung bestimmter Detektionseinrichtungen zu definierten Tätigkeitsszenarien festlegt, wobei für jedes Tätigkeitsszenario bestimmt wird, mittels welcher Detektionseinrichtung das Auftreten eines definierten Ereignisses ermittelt wird, und wobei zusätzlich zu dem definierten ereignisabhängigen Tätigkeitsszenario zumindest eine Reinigungstätigkeit auch zeitabhängig geplant wird, wobei in dem Fall, dass ein Zeitpunkt eines Auftretens eines definierten Ereignisses einen vorbestimmten zeitlichen Mindestabstand zu einem definierten Zeitpunkt zur Ausführung der zeitabhängig geplanten Reinigungstätigkeit für denselben Umgebungsteilbereich unterschreitet, nach vordefinierten Regeln entschieden wird, ob nur das ereignisabhängige Tätigkeitsszenario oder nur die zeitabhängig geplante Reinigungstätigkeit ausgeführt wird.

Insbesondere kann bei der Entscheidung darüber, welche Reinigungstätigkeit in dem betreffenden Umgebungsteilbereich ausgeführt wird, zusätzlich ein oder mehrere weitere Parameter berücksichtigt werden, ausgewählt aus der Gruppe: Ein Zeitpunkt und/oder eine Art einer zuletzt ausgeführten Reinigungstätigkeit in dem betreffenden Umgebungsteilbereich, eine Anzahl der in der Umgebung anwesenden Personen und/oder Tiere, eine in dem Umgebungsteilbereich auftretende übliche Schmutzmenge, eine Reinigung des Umgebungsteilbereiches durch ein manuell geführtes Reinigungsgerät. Die in der Umgebung vorhandenen Umgebungsteilbereiche können somit sowohl Gegenstand einer zeitabhängigen Planung, beispielsweise Kalenderplanung, als auch einer ereignisabhängigen Planung von Reinigungstätigkeiten sein, wobei im Fall eines zeitlichen Konfliktes zwischen einem Ausführungszeitpunkt einer zeitabhängig geplanten Reinigungstätigkeit und einem Ausführungszeitpunkt einer ereignisabhängig geplanten Reinigungstätigkeit geprüft wird, welche Reinigungstätigkeit ausgeführt werden soll.

Der Nutzer definiert zeitlich im Voraus ein Tätigkeitsszenario, welches zumindest eine bestimmte Reinigungstätigkeit enthält, die im Falle des zufälligen, nicht geplanten Eintretens eines vordefinierten Ereignisses in einem bestimmten Umgebungsteilbereich auszuführen ist. Das Tätigkeitsszenario kann insbesondere eine Mehrzahl von Reinigungstätigkeiten definieren, die zeitlich und/oder organisatorisch zusammenhängend bei Eintreten des definierten Ereignisses auszuführen sind. Der Nutzer kann in dem Tätigkeitsszenario mehrere Reinigungstätigkeiten zusammenfassen, die mit einem einzigen Steuerbefehl ausgelöst werden können, nämlich bei Eintreten des mit diesem Tätigkeitsszenario verknüpften definierten Ereignisses. Die ereignisabhängigen Tätigkeitsszenarien können somit bei Bedarf, nämlich Eintreten des Ereignisses, schnell angesprochen werden, ohne dass der Nutzer in dem Moment ermitteln muss, welche Reinigungstätigkeiten erforderlich sind und wie er diese zusammenstellt, um ein geeignetes Bündel von Reinigungstätigkeiten auszuführen. Im Falle des Eintretens des Ereignisses entfällt somit die Notwendigkeit einer spontanen Planung von Reinigungstätigkeiten durch entweder den Nutzer oder die Steuereinrichtung des Systems. Dadurch ist das Verfahren besonders zeitoptimiert und ressourcenschonend. Das ereignisabhängige Tätigkeitsszenario enthält eine eindeutige und feste Zuordnung einer oder mehrerer auszuführender Reinigungstätigkeiten zu einem bestimmten Umgebungsteilbereich, so dass bei Aufrufen des definierten Tätigkeitsszenarios ausschließlich nur die definierte Reinigungstätigkeit beziehungsweise die definierten Reinigungstätigkeiten in dem definierten Umgebungsteilbereich beziehungsweise mehreren definierten Umgebungsteilbereichen durchgeführt werden. Auf diese Art und Weise kann der Nutzer eine Mehrzahl von Tätigkeitsszenarien definieren, die in der Datenbank des Reinigungssystems abgelegt werden und bei Eintreten eines definierten Ereignisses aus der Datenbank abgerufen werden. Die Ereignisse sind ebenfalls im Voraus definiert. Beispielsweise kann ein sogenanntes "Schwiegermutterszenario" definiert werden, bei welchem diejenigen Umgebungsteilbereiche einer Wohnung gesaugt werden, welche von der Schwiegermutter (oder allgemein einem Besucher) üblicherweise betreten werden. Zum Definieren der Tätigkeitsszenarien sowie Zuordnen von Reinigungstätigkeiten zu Umgebungsteilbereichen gliedert der Nutzer eine Umgebung, beispielsweise eine Wohnung, vorzugsweise in Umgebungsteilbereiche. Die Umgebungsteilbereiche können beispielsweise Räume einer Wohnung sein, insbesondere Wohnzimmer, Küche, Esszimmer, Gäste-WC, Flur, Badezimmer, Schlafzimmer, Kinderzimmer, Arbeitszimmer und dergleichen. Darüber hinaus werden Reinigungstätigkeiten definiert, welche von dem Reinigungsgerät beziehungsweise den Reinigungsgeräten des Reinigungssystems ausgeführt werden können. Zu den Reinigungstätigkeiten gehören beispielsweise Saugen, trockenes Wischen, feuchtes Wischen, Polieren, Bohnern oder Ähnliches. Indem der Nutzer nun festlegt, bei welchem in Zukunft zufällig auftretenden Ereignis welche Reinigungstätigkeiten in welchen Umgebungsteilbereichen auszuführen sind, werden Tätigkeitsszenarien gebildet, die der Nutzer dann später, wenn das Ereignis tatsächlich eingetreten ist, mit einem Szenario-Namen ansprechen kann. Ein solcher Szenario-Name kann beispielsweise Besuch, Urlaubsrückkehr, Haustier, Kochen, Besuchsende, Pollenflug, Schlechtwetter oder Ähnliches sein. Sofern das Ereignis dann eintritt, beispielsweise sich Besuch ankündigt, kann der Nutzer des Reinigungssystems der Steuereinrichtung mitteilen, dass das Tätigkeitsszenario "Besuch" gestartet werden soll. Zu diesem Zweck kann der Nutzer beispielsweise ein mobiles Endgerät, insbesondere ein Mobiltelefon, einen Tablet-Computer oder Ähnliches, nutzen und aus einer Mehrzahl von vordefinierten Tätigkeitsszenarien das gewünschte Tätigkeitsszenario "Besuch" auswählen und starten. Die für dieses Tätigkeitsszenario im Voraus bestimmten Umgebungsteilbereiche werden dann durch eines oder mehrere Reinigungsgeräte gemäß der ebenfalls zuvor festgelegten Reihenfolge bearbeitet, beispielsweise gesaugt und/oder gewischt. Auf diese Art und Weise können eine Vielzahl von individuellen Tätigkeitsszenarien definiert und in der Datenbank des Reinigungssystems gespeichert werden. Bei Eintreten eines durch den Nutzer definierten Ereignisses kann dann ein entsprechendes Tätigkeitsszenario gestartet werden, welches die von dem Nutzer zuvor für das Ereignis definierten Reinigungstätigkeiten umfasst. Es ist des Weiteren möglich, dass der Nutzer bei dem Definieren der Tätigkeitsszenarien auch maschinell durch eine Recheneinrichtung des Reinigungssystems unterstützt wird. Beispielsweise kann ein Grundriss der Umgebung zunächst maschinell in sinnvolle Umgebungsteilbereiche unterteilt werden. Dazu kann der Grundriss beispielsweise dahingehend analysiert werden, dass Bereiche, die von Wänden und Türdurchgängen begrenzt sind, als Räume einer Wohnung identifiziert werden. Diese Umgebungsteilbereiche können dem Nutzer des Reinigungssystems dann beispielsweise auf einem Computer angezeigt werden, um diese für bestimmte Reinigungstätigkeiten einzuplanen. Der Nutzer kann dabei in der Datenbank Zuordnungen derart treffen, welcher Umgebungsteilbereich welche Reinigungstätigkeit benötigt, beispielsweise aufgrund einer dort vorhandenen Bodenart oder Ähnlichem, und festlegen, dass bestimmte Umgebungsteilbereiche nur für bestimmte Ereignisse mit einer Porentiefreinigung, Schnellreinigung, Spotreinigung, feuchten, nassen oder trockenen Reinigung, bei aktiviertem Luftreiniger, bei geöffnetem Fenster oder Ähnlichem behandelt werden sollen.

Umgebungsteilbereiche im Sinne der Erfindung können nicht nur einzelne Räume, sondern auch Raumbereiche sein, die vorzugsweise einheitliche Eigenschaften haben und somit eine bestimmte Reinigungstätigkeit und ggf. auch Reinigungsintensität erfordern. Die Umgebungsteilbereiche können vorzugsweise durch eines oder mehrere Reinigungsgeräte des Reinigungssystems erkundet werden, vorzugsweise im Rahmen einer Erkundungsfahrt und Erfassung der vorhandenen Eigenschaften. Anschließend kann der Nutzer beispielsweise einen Grundriss der Umgebung mit den Umgebungsteilbereichen auf einem mobilen Endgerät oder auch lokalen Computer aufrufen und Bezeichnungen für die einzelnen Umgebungsteilbereiche vergeben. Ein im Sinne der Erfindung im Voraus definiertes Tätigkeitsszenario, welches bei Eintreten eines Ereignisses ausgeführt werden soll, fasst einen oder mehrere der definierten Umgebungsteilbereiche zusammen, die zusammenhängend nach bestimmten Reinigungsvorgaben gereinigt werden sollen. Die Zuordnung der Umgebungsteilbereiche zu den Tätigkeitsszenarien kann dann beispielsweise in einer in der Datenbank gespeicherten Matrix erfasst werden. Dabei kann für jeden der Umgebungsteilbereiche eine Reinigungsart vordefiniert sein, beispielsweise nass oder trocken. Die Matrix kann nach der Art einer Tabelle angelegt sein, wobei die Tabellenspalten beispielsweise die Umgebungsteilbereiche enthalten, und die Tabellenzeilen die definierten Ereignisse. Dasjenige Tabellenfeld, welches dann für ein bestimmtes Ereignis und einen bestimmten Umgebungsteilbereich definiert ist, kann vorzugsweise eine Angabe über die Reinigungsart enthalten, beispielsweise Saugen, Wischen, trocken, nass, Intensivreinigung, Schonreinigung, Eco-Reinigung oder Ähnliches.

Des Weiteren kann vorgesehen sein, dass das Tätigkeitsszenario eine Angabe über ein Reinigungsgerät, von welchem die Reinigungstätigkeit ausgeführt werden soll, enthält. In diesem Sinne sind in dem Tätigkeitsszenario bereits auch für bestimmte Reinigungstätigkeiten zu verwendende Reinigungsgeräte vordefiniert. Beispielsweise kann die Angabe des Reinigungsgerätes in der vorgenannten Tabelle hinterlegt werden, so dass bereits vor Eintreten des Ereignisses festgelegt ist, welcher Umgebungsteilbereich bei Eintreten welches Umgebungsereignisses durch welches Reinigungsgerät gereinigt werden soll, und welche Art einer Reinigungstätigkeit von diesem ausgeführt werden soll. Dabei kann die Reinigungstätigkeit selbst bereits die Art des Reinigungsgerätes definieren. Sofern eine Wischreinigung als Reinigungstätigkeit vorgesehen ist, wird in dem entsprechenden Tätigkeitsszenario dann ein Wischgerät eingeplant, welches diese Reinigungstätigkeit tatsächlich auch ausführen kann. Die Zuordnung der Reinigungsgeräte im Rahmen eines bestimmten Tätigkeitsszenarios kann manuell durch einen Nutzer erfolgen, oder auch automatisch durch eine Recheneinrichtung des Reinigungssystems, welche die zur Verfügung stehenden Reinigungsgeräte kennt und diejenigen auswählt, die optimal zur Bearbeitung eines bestimmten Umgebungsteilbereiches und einer bestimmten Reinigungstätigkeit geeignet sind.

Es kann vorgesehen sein, dass der Nutzer dem Reinigungssystem das Eintreten eines definierten Ereignisses manuell mitteilt oder dass das Eintreten des definierten Ereignisses mittels einer Detektionseinrichtung detektiert und dem System automatisch mitgeteilt wird. In beiden Fällen ist vorgesehen, dass eine Steuereinrichtung des Systems ein zu dem mitgeteilten Ereignis definiertes Tätigkeitsszenario aus der Datenbank abruft und die Ausführung der zumindest einen davon umfassten Reinigungstätigkeit steuert. Die Tätigkeitsszenarien können somit entweder automatisch durch die Steuereinrichtung des Reinigungssystems oder manuell durch die Eingabe eines Nutzers aktiviert werden, um eine vordefinierte Reinigungstätigkeit in einem vordefinierten Umgebungsteilbereich auszuführen beziehungsweise eine Abfolge einer Mehrzahl von Reinigungstätigkeiten in bestimmten Umgebungsteilbereichen. Bevorzugt verfügt der Nutzer über ein Endgerät, welches über ein drahtloses Kommunikationssystem in das Reinigungssystem eingebunden ist, und auf welchem eine Applikation installiert ist, über welche der Nutzer einerseits Ereignisse definieren und Tätigkeitsszenarien erstellen kann, und andererseits mitteilen kann, dass ein bestimmtes Ereignis eingetreten ist, beispielsweise eine Ankündigung von Besuch, eine bestimmte Wettervorhersage, die ein erhöhtes Schmutzaufkommen in einem oder mehreren Umgebungsteilbereichen hervorruft oder Ähnliches. Die Steuereinrichtung des Systems greift auf die Datenbank, und darin beispielsweise die hinterlegte Tabelle, zu und ruft ein zu dem mitgeteilten Ereignis gespeichertes Tätigkeitsszenario ab. Die Steuereinrichtung steuert daraufhin die in dem Tätigkeitsszenario definierten Reinigungstätigkeiten in den korrespondierenden Umgebungsteilbereichen, wobei bereits definierte Reinigungsgeräte vorgespeichert sein können, die die Reinigungstätigkeiten ausführen sollen, oder die Steuereinrichtung spontan ermittelt, welches Reinigungsgerät aktuell zur Durchführung der Reinigungstätigkeit zur Verfügung steht und geeignet ist. Bei der Steuerung der Ausführung der Reinigungstätigkeiten kann die Steuereinrichtung auf weitere Informationsquellen zugreifen, nämlich insbesondere auf eine Umgebungskarte, die von einem Reinigungsgerät erstellt wurde und/oder in einer Datenbank des Reinigungssystems gespeichert ist. Des Weiteren greift die Steuereinrichtung vorzugsweise auf ebenfalls beispielsweise in der Datenbank gespeicherte Informationen zurück, die einen Zeitpunkt einer letzten Reinigungstätigkeit in einem bestimmten Umgebungsteilbereich angeben, eine Art einer letzten Reinigungstätigkeit in einem bestimmten Umgebungsteilbereich, eine durchschnittliche Schmutzmenge, die üblicherweise in einem bestimmten Umgebungsteilbereich zu erwarten ist, Informationen über eine Anzahl von Personen und/oder Haustieren in einem Haushalt, eine Information darüber, ob ein Nutzer des Reinigungssystems neben den sich selbsttägig fortbewegenden Reinigungsgeräten auch Reinigungstätigkeiten mittels manueller Reinigungsgeräte ausführt, eine Information darüber, ob aktuell in einem oder mehreren Umgebungsteilbereichen handgeführte und/oder autonome Reinigungsgeräte betrieben werden. Die Steuereinrichtung kann daraufhin beispielsweise anhand der Zusatzinformationen ermitteln, welches Reinigungsgerät am besten zur Ausführung einer bestimmten Reinigungstätigkeit in einem bestimmten Umgebungsteilbereich geeignet ist und/oder welche Reinigungsparameter der Reinigungstätigkeit anzuwenden sind, beispielsweise eine intensive Reinigung oder eine Soft-Reinigung.

Des Weiteren wird vorgeschlagen, dass mehrere ereignisabhängige Tätigkeitsszenarien mit einer definierten Rangfolge zueinander gewichtet werden, wobei in dem Fall, dass mehrere definierte Ereignisse gleichzeitig eintreten, dasjenige Tätigkeitsszenario zuerst ausgeführt wird, welches einen höchsten Rang aufweist. Insbesondere kann vorgesehen sein, dass einem solchen Tätigkeitsszenario ein höchster Rang zugeordnet wird, welches für ein Ereignis definiert ist, das eine Beteiligung einer Person und/oder eines Tieres beinhaltet. Gemäß dieser Ausgestaltung sind die von dem Nutzer definierten Tätigkeitsszenarien mit einer Priorität versehen, die angibt, ob ein bestimmtes Tätigkeitsszenario vorrangig zu einem oder mehreren anderen Tätigkeitsszenarien auszuführen ist. In bestimmten Situationen kann es dazu kommen, dass zu einem Zeitpunkt mehrere Ereignisse eintreten, beispielsweise einerseits ein Besuch angekündigt ist, und andererseits eine Wettersituation auftritt, die ebenfalls eine oder mehrere bestimmte Reinigungstätigkeiten erfordert. In einer solchen Situation bestimmt eine in der Datenbank gespeicherte Rangfolge der definierten Tätigkeitsszenarien, welches der zu den Ereignissen definierten Tätigkeitsszenarien zuerst oder alleinig auszuführen ist, d.h. in dem vorgenannten Beispiel, ob das Besuchsszenario oder das Schlechtwetterszenario ausgeführt werden soll. Grundsätzlich ist es auch möglich, dass keine Auswahl zwischen beiden oder mehreren Tätigkeitsszenarien erfolgen muss, sondern dass zwei Tätigkeitsszenarien miteinander kombiniert werden, so dass insgesamt alle Umgebungsteilbereiche gereinigt werden, die Gegenstand zumindest eines der beiden Tätigkeitsszenarien sind. Insofern kann eine gleichzeitige Abarbeitung mehrerer Tätigkeitsszenarien erreicht werden, so dass im Gesamtergebnis alle Umgebungsteilbereiche gereinigt werden, die den beiden definierten Ereignissen zugeordnet sind. Des Weiteren kann auch vorgesehen sein, dass beide Tätigkeitsszenarien zeitlich hintereinander ausgeführt werden, wobei festgelegt ist, welches Tätigkeitsszenario einen höheren Rang genießt und somit vor dem anderen Tätigkeitsszenario ausgeführt wird. Insbesondere gilt bei der Festlegung der Rangfolge der Tätigkeitsszenarien, dass solche Tätigkeitsszenarien höherrangig sind, welche bei einem Ereignis ausgeführt werden sollen, dass eine Beteiligung einer Person und/oder eines Tieres beinhaltet. Solche Ereignisse sind beispielsweise ein Besuch, die Beendigung eines Besuchs, Kochen und Backen, Hund verlässt die Wohnung zum Gassi gehen oder Ähnliches. Alle anderen Tätigkeitsszenarien, deren Ausführung von einem Ereignis abhängig ist, welches keine Beteiligung einer Person und/oder eines Tieres beinhaltet, können demgegenüber mit einer niedrigeren Priorität belegt sein.

Des Weiteren kann vorgesehen sein, dass mehrere Umgebungsteilbereiche, welche im Rahmen desselben ereignisabhängigen Tätigkeitsszenarios gereinigt werden sollen, mit einer definierten Rangfolge zueinander gewichtet werden, wobei der Umgebungsteilbereich mit höchstem Rang zuerst gereinigt wird, wobei demjenigen Umgebungsteilbereich ein höchster Rang zugeordnet wird, welcher zusätzlich zu dem ereignisabhängigen Tätigkeitsszenario auch Ausführungsort für eine zeitabhängig geplante Reinigungstätigkeit ist. Insbesondere kann einem solchen Umgebungsteilbereich ein höchster Rang zugeordnet werden, der für eine zeitabhängig geplante Reinigungstätigkeit zu einem früheren Zeitpunkt eingeplant ist. Gemäß dieser Ausgestaltung werden die an einem gemeinsamen Tätigkeitsszenario beteiligten Umgebungsteilbereiche mit einer Rangfolge abgespeichert, so dass bei Ausführen des Tätigkeitsszenarios zunächst diejenigen Umgebungsteilbereiche gereinigt werden, die einen höheren Rang aufweisen als andere Umgebungsteilbereiche. Die Zuordnung der Ränge der Umgebungsteilbereiche erfolgt dabei nach der Maßgabe, dass ein solcher Umgebungsteilbereich einen höheren oder höchsten Rang relativ zu anderen Umgebungsteilbereichen erhält, welcher nicht nur für ein ereignisabhängiges Tätigkeitsszenario eingeplant ist, sondern in welchem zudem auch zu einem bestimmten Zeitpunkt eine Reinigungstätigkeit ausgeführt werden soll. In diesem Fall ist der Umgebungsteilbereich beispielsweise in ein zeitlich wiederkehrendes Reinigungsmuster eingebunden und wird als Ausführungsort für eine zeitabhängig geplante Reinigungstätigkeit zu bestimmten Zeitpunkten gereinigt, beispielsweise regelmäßig jeden Samstag, regelmäßig jeden Tag um 10 Uhr vormittags oder Ähnliches. Die zeitabhängig geplante Reinigungstätigkeit kann beispielsweise in einem Kalender gespeichert sein, welcher Termin für eines oder mehrere Reinigungsgeräte und einen oder mehrere Umgebungsteilbereiche enthält. Sofern ein bestimmter Umgebungsteilbereich somit auch Ausführungsort für zeitabhängig geplante Reinigungstätigkeiten ist, soll dieser zuerst gereinigt werden. Sofern in dem Tätigkeitsszenario zudem mehrere Umgebungsteilbereiche von einer solchen Doppelbelegung betroffen sind, d.h. sowohl Ausführungsort für eine zeitabhängig geplante Reinigungstätigkeit, als auch Ausführungsort für eine ereignisabhängige Reinigungstätigkeit sind, wird derjenige Umgebungsteilbereich zuerst gereinigt, dessen zeitlich geplante Reinigungstätigkeit als nächstes fällig ist. Dadurch wird sichergestellt, dass es in dem betreffenden Umgebungsteilbereich nicht zu einem zeitlichen und/oder örtlichen Konflikt kommt. Des Weiteren kann auch vorgesehen sein, dass die zeitabhängig geplante Reinigungstätigkeit oder die ereignisabhängig geplante Reinigungstätigkeit entfällt, sofern eine Zeitdifferenz zwischen beiden Reinigungstätigkeiten eine definierte Mindestzeitspanne unterschreiten würde. Ebenso können die Reinigungstätigkeiten auch miteinander kombiniert werden, so dass anstatt zweier aufeinanderfolgender Reinigungstätigkeiten nur eine einzige Reinigungstätigkeit erfolgt, diese dann jedoch insbesondere im Rahmen der Ausführung des ereignisabhängigen Tätigkeitsszenarios. Es kann darüber hinaus auch eine Rangfolge bei zeitlichen Konflikten derart vorgesehen sein, dass die Steuereinrichtung überprüft, in welchem Zeitfenster wo gereinigt werden soll. Wenn eine bestimmte Zeitspanne nicht zur Reinigung desselben oder mehrerer Umgebungsteilbereiche ausreicht, kann vorgesehen sein, eine Dauer einer Reinigungstätigkeit zu reduzieren, so dass eine nachfolgende Reinigungstätigkeit wie geplant stattfinden kann. Die zeitlich gekürzte Reinigungstätigkeit kann dann kompensiert werden, indem eine zeitabhängige Reinigungstätigkeit geplant wird, die ein noch vorhandenes Reinigungserfordernis befriedigt. Sofern bereits eine derartige Reinigungstätigkeit zeitlich wiederkehrend geplant ist, kann zudem der Zeitabstand zwischen den regelmäßigen Reinigungstätigkeiten verkürzt werden, so dass die Reinigungstätigkeiten insgesamt einen optimalen Reinigungserfolg haben. Gegebenenfalls können auch definierte Umgebungsteilbereiche verkleinert beziehungsweise weiter unterteilt werden, so dass insbesondere ein solcher Anteil eines definierten Umgebungsteilbereiches zunächst gereinigt wird, welcher dafür ein höchstes Erfordernis aufweist.

Es kann des Weiteren vorgesehen sein, dass ein solcher Umgebungsteilbereich vorrangig bearbeitet wird, welcher für mehrere ereignisabhängige Tätigkeitsszenarien und/oder für sowohl ein ereignisabhängiges Tätigkeitsszenario, als auch eine zeitabhängig geplante Reinigungstätigkeit eingeteilt ist. Sofern es eine Überschneidung zwischen mehreren ereignisdefinierten Tätigkeitsszenarien derart gibt, dass mehrere Tätigkeitsszenarien eine Reinigung desselben Umgebungsteilbereiches beinhalten, kann beispielsweise definiert sein, insbesondere ebenfalls wieder im Rahmen einer vordefinierten Rangfolge, dass ein Umgebungsteilbereich bei der Ausführung eines Tätigkeitsszenarios vorrangig, d.h. zeitlich zuerst, bearbeitet wird, der ebenfalls Gegenstand anderer definierter Ereignisse ist. Dadurch kann sichergestellt werden, dass es in dem bestimmten Umgebungsteilbereich nicht zu einem Ausführungskonflikt kommt, falls mehrere Ereignisse gleichzeitig eintreten, die denselben Umgebungsteilbereich betreffen. Ebenso kann ein solcher Umgebungsteilbereich vorrangig bearbeitet werden, welcher sowohl im Falle des Eintretens eines vordefinierten Ereignisses gereinigt werden soll, als auch in Abhängigkeit von einem definierten Reinigungszeitplan. Dadurch kann im Voraus vermieden werden, dass eine spontane Abwägung zwischen der zeitabhängigen Planung und der ereignisabhängigen Planung erfolgen muss, wenn ein definiertes Ereignis zufällig eintritt.

Des Weiteren wird vorgeschlagen, dass das Auftreten eines definierten Ereignisses maschinell mittels einer Detektionseinrichtung des Reinigungsgerätes oder mittels einer zu dem Reinigungsgerät externen Detektionseinrichtung detektiert wird, wobei das Ereignis ausgewählt ist aus der Gruppe: Anwesenheit von Personen und/oder Tieren in zumindest einem Umgebungsteilbereich, Auftreten einer Verschmutzung in zumindest einem Umgebungsteilbereich, Beginn einer eine Verschmutzung hervorrufenden Tätigkeit einer Person, Auftreten eines Umwelt- und/oder Wetterereignisses, Auftreten einer Luftverschmutzung und/oder Pollenbelastung oberhalb eines definierten Grenzwertes, Auftreten eines akustischen Signals in zumindest einem Umgebungsteilbereich, Aktivität eines elektrischen Verbrauchers und/oder eines elektrischen Schaltelementes in zumindest einem Umgebungsteilbereich. Gemäß dieser Ausgestaltung wird das Ereignis nicht manuell von einem Nutzer an eine Steuereinrichtung des Reinigungssystems gemeldet, sondern vielmehr von einer dem Reinigungssystem zugeordneten Detektionseinrichtung detektiert und gemeldet. Diese Detektionseinrichtung kann einem Reinigungsgerät zugeord- -net sein, oder auch unabhängig davon in der Umgebung installiert sein, beispielsweise als ortsfeste Detektionseinrichtung, die einen Raum überwacht oder Ähnliches. Darüber hinaus kann die Detektionseinrichtung auch eine externe Detektionseinrichtung sein, die lediglich Umgebungsparameter an das Reinigungssystem meldet, welche ein Ereignis definieren, in dessen Abhängigkeit ein Reinigungsszenario ausgeführt werden soll. Bei derartigen Detektionseinrichtungen kann es sich beispielsweise um Wettersensoren, Luftverschmutzungssensoren, Pollensensoren oder Ähnliches handeln, die dem Haushalt des Nutzers nicht zugehörig sind, sondern vielmehr von Wetterstationen oder Ähnlichem betrieben werden. Das von der Detektionseinrichtung detektierte Ereignis kann beispielsweise durch eine Schmutzmessung, Luftfeuchtigkeitsmessung, Pollenmessung oder Ähnliches detektiert werden. Darüber hinaus können definierte Ereignisse auch eine Bewegung in einem Umgebungsteilbereich, eine Datenübertragung über ein Funkkommunikationsnetz, beispielsweise über eine WLAN- und/oder Bluetooth-Verbindung, ein Signal eines elektronischen Schalters, beispielsweise eines in einem sogenannten Smart-Home-System eingebundenen Schalters, sein. Ein solcher Schalter kann beispielsweise das Schließen einer Haustür, das Öffnen eines Fensters, die Betätigung eines Lichtschalters, die Aktivierung eines Mikrofons, die Aktivierung einer Überwachungskamera oder Ähnliches angeben. Weitere definierte Ereignisse können beispielsweise auf der Basis eines Pollenflugradars, Regenradars oder sonstiger Daten einer Wetterstation detektiert werden. Es ist vorgesehen, dass eine Zuordnung bestimmter Detektionseinrichtungen beziehungsweise externer Informationsquellen zu definierten Tätigkeitsszenarien erfolgt. Dabei wird für jedes Tätigkeitsszenario bestimmt, mittels welcher Detektionseinrichtung das Auftreten eines definierten Ereignisses ermittelt wird. Für ein definiertes Ereignis "Besuchsende" kann beispielsweise ein Signal eines Bewegungssensors verwendet werden. Gleiches gilt für das Ereignis "Haustier anwesend". Für ein Ereignis "Kochen/Backen" kann beispielsweise eine Aktivität eines oder mehrerer Küchengeräte detektiert werden. Für definierte Ereignisse wie beispielsweise "Schlechtwetter", "Pollenflug" oder Ähnliches können aus externen Datenbanken bereitgestellte Wetterinformationen und/oder Pollenfluginformationen verwendet werden. Die Zuordnung bestimmter Sensoren beziehungsweise Informationsquellen zu definierten Tätigkeitsszenarien ist ebenfalls in der zuvor beschriebenen Datenbank hinterlegt. Eine solche Zuordnung legt ein Nutzer des Reinigungssystems bei dem Erstellen der Tätigkeitsszenarien fest.

Zudem wird vorgeschlagen, dass in der Umgebungskarte und/oder der Datenbank des Reinigungssystems zu jedem Umgebungsteilbereich eine Angabe über eine in dem Umgebungsteilbereich zu reinigende Bodenart und/oder eine Angabe über ein für die Reinigung vorgesehenes Reinigungsgerät gespeichert wird. Somit kann die Steuereinrichtung bei dem Auftreten eines definierten Ereignisses das zugehörige Tätigkeitsszenario, nämlich die Ausführung einer bestimmten Reinigungstätigkeit in einem bestimmten Umgebungsteilbereich, durch ein bestimmtes Reinigungsgerät bevorzugen, welches für die Reinigung einer bestimmten Bodenart, die in dem betroffenen Umgebungsteilbereich vorliegt, besonders geeignet ist. Die Zuordnung der Bodenarten zu Umgebungsteilbereichen beziehungsweise der Reinigungsgeräte zu bestimmten Reinigungstätigkeiten kann der Nutzer beispielsweise manuell über eine auf einem Nutzerendgerät installierte Applikation vornehmen. Darüber hinaus können beispielsweise auch Bodenarten automatisch durch eines der Reinigungsgeräte detektiert werden und in der Datenbank gespeichert werden.

### Kurze Beschreibung der Zeichnungen

Im Folgenden wird die Erfindung anhand von Ausführungsbeispielen näher erläutert. Es zeigen:
- Fig. 1: ein Reinigungssystem mit einer Mehrzahl von Reinigungsgeräten,
- Fig. 2a: ein erstes ereignisabhängiges Tätigkeitsszenario,
- Fig. 2b: ein zweites ereignisabhängiges Tätigkeitsszenario,
- Fig. 2c: ein drittes ereignisabhängiges Tätigkeitsszenario,
- Fig. 3: eine Datenbank mit einer Tabelle, welche Tätigkeitsszenarien für die definierten Umgebungsteilbereiche und Reinigungstätigkeiten enthält.

### Beschreibung der Ausführungsformen

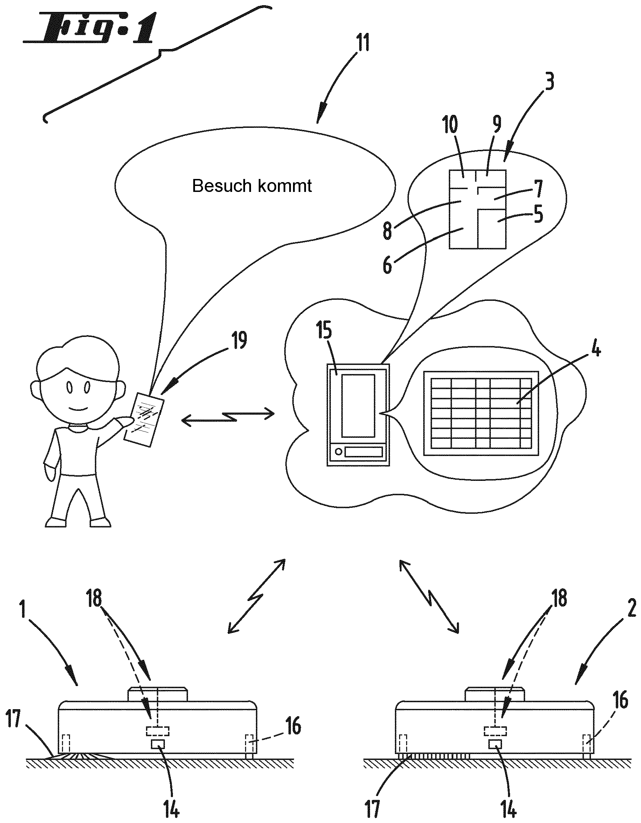

Figur 1 zeigt ein Reinigungssystem mit zwei beispielhaft dargestellten Reinigungsgeräten 1, 2 stellvertretend für weitere mögliche Reinigungsgeräte 1, 2 des Reinigungssystems. Ein Reinigungssystem kann alternativ auch nur ein einziges Reinigungsgerät 1, 2 aufweisen. Das erste Reinigungsgerät 1 ist hier beispielsweise ein sich selbsttätig fortbewegender Saugroboter. Das beispielhaft dargestellte zweite Reinigungsgerät 2 ist ein sich selbsttätig fortbewegender Wischroboter. Zur selbsttätigen Fortbewegung besitzen die Reinigungsgeräte 1, 2 Räder 16, die von einem nicht weiter dargestellten Antriebssystem angetrieben werden. Je nach dem Gerätetyp des Reinigungsgerätes 1, 2 besitzt jedes Reinigungsgerät 1, 2 unterschiedliche Reinigungselemente 17. Dies sind hier bei dem Reinigungsgerät 1 eine rotierende Bürste, sowie bei dem Reinigungsgerät 2 ein vorzugsweise schwingendes Wischelement. Die Reinigungsgeräte 1, 2 weisen jeweils einen nicht dargestellten lokalen Speicher auf, in welchem eine Umgebungskarte 3 der Umgebung gespeichert ist. Anhand der Umgebungskarte 3 kann sich das Reinigungsgerät 1, 2 bei einer selbsttätigen Fortbewegung in der Umgebung orientieren und selbstlokalisieren. Für die Elektroversorgung der einzelnen elektrischen Verbraucher der Reinigungsgeräte 1, 2, wie beispielsweise für das Antriebssystem, weisen die Reinigungsgeräte 1, 2 jeweils einen nicht dargestellten, wiederaufladbaren Akkumulator auf.

Die Reinigungsgeräte 1, 2 sind des Weiteren jeweils mit einer Navigationseinrichtung 18 ausgestattet. Die Navigationseinrichtung 18 verfügt über eine Sensorik, insbesondere Abstandsmesseinrichtung, die Abstände zu Objekten in der Umgebung messen kann. Die Sensorik weist hier beispielsweise eine Laserdiode auf, deren emittierter Lichtstrahl aus einem Gehäuse des Reinigungsgerätes 1, 2 herausgeführt und um eine in der gezeigten Orientierung des Reinigungsgerätes 1, 2 senkrecht stehende Drehachse rotierbar ist. Dadurch ist insbesondere eine Rundum-Abstandsmessung um das Reinigungsgerät 1, 2 möglich. Mit Hilfe der Sensorik kann die Umgebung in einer bevorzugt horizontalen Ebene vermessen werden, d.h. in einer zu der zu bearbeitenden Fläche parallelen Ebene. Dadurch kann das Reinigungsgerät 1, 2 unter Vermeidung von Kollisionen mit Hindernissen in der Umgebung verfahren. Die mittels der Sensorik aufgenommenen Umgebungsdaten werden zur Erstellung der beispielhaft dargestellten Umgebungskarte 3 genutzt. Des Weiteren kann das Reinigungsgerät 1, 2 zur Navigation und Selbstlokalisierung beispielsweise einen nicht dargestellten Odometrie-Sensor aufweisen, welcher eine von dem Reinigungsgerät 1, 2 zurückgelegte Wegstrecke misst. Des Weiteren ist es auch möglich, dass das Reinigungsgerät 1, 2 beispielsweise einen oder mehrere Kontaktsensoren oder dergleichen aufweist.

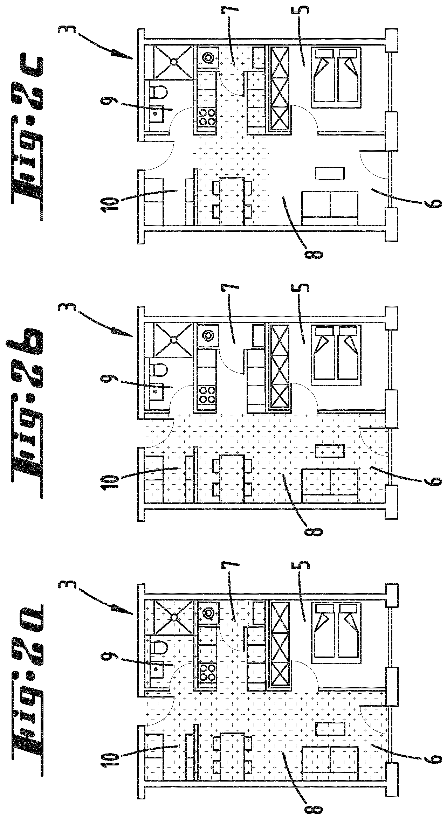

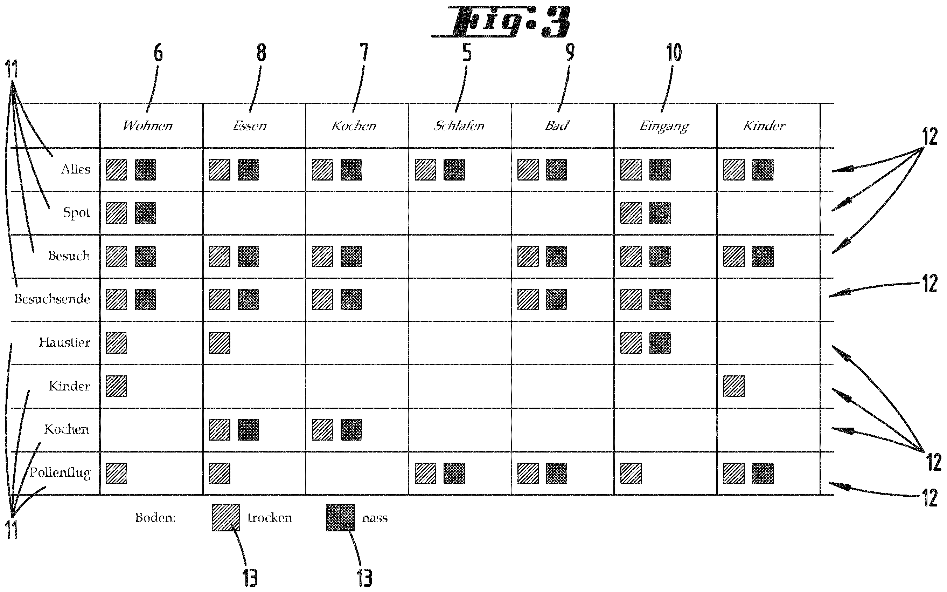

Die Reinigungsgeräte 1, 2 stehen hier über eine drahtlose Kommunikationsverbindung, vorzugsweise ein WLAN, in Kommunikationsverbindung mit einer zentralen Steuereinrichtung 15, welche sich hier beispielsweise in einer sogenannten Cloud befindet. Der Steuereinrichtung 15 ist eine Datenbank 4 zugeordnet, welche eine später mit Bezug zu den Figuren 2a, 2b, 2c und 3 noch näher erläuterte Tabelle enthält. Teilnehmer des drahtlosen Kommunikationsnetzwerkes ist des Weiteren auch ein Endgerät 19 des Nutzers, welches hier beispielsweise ein Mobiltelefon ist, auf dem eine Applikation installiert ist. Über das Endgerät 19 kann der Nutzer dem Reinigungssystem Ereignisse 11 mitteilen. Hier äußert der Nutzer beispielsweise das Ereignis 11 "Besuch kommt". Das Ereignis 11 "Besuch kommt" löst die Ausführung eines vordefinierten Tätigkeitsszenarios 12 aus, welches mehrere Reinigungstätigkeiten 13 in bestimmten Umgebungsteilbereichen 5 bis 10 beinhaltet. Dies wird später noch mit Bezug zu den Figuren 2a, 2b, 2c und 3 näher erläutert. Die Reinigungsgeräte 1, 2 weisen des Weiteren Detektionseinrichtungen 14 auf, welche geeignet sind, Ereignisse 11 anhand von Umgebungsparametern zu detektieren.

Die Steuereinrichtung 15 des Reinigungssystems hat Zugriff auf die von den Reinigungsgeräten 1, 2 erstellte Umgebungskarte 3, welche einen Grundriss einer Wohnung darstellt, mit Umgebungsteilbereichen 5 bis 10 und auf die Datenbank 4, welche hier beispielsweise in Tabellenform vorliegt und Tätigkeitsszenarien 12 beinhaltet, die definierte Kombinationen von Umgebungsteilbereichen 5 bis 10 und darin auszuführende Reinigungstätigkeiten 13 enthalten.

Die Figuren 2a bis 2c stellen drei verschiedene Tätigkeitsszenarien graphisch anhand einer Umgebungskarte 3 dar. Die dargestellte Umgebungskarte 3 enthält insgesamt sechs Umgebungsteilbereiche 5 bis 10, von welchen ein erster Umgebungsteilbereich 5 ein Schlafzimmer angibt, ein weiterer Umgebungsteilbereich 6 ein Wohnzimmer, ein Umgebungsteilbereich 7 eine Küche, ein Umgebungsteilbereich 8 ein Esszimmer, ein Umgebungsteilbereich 9 ein Badezimmer und ein Umgebungsteilbereich 10 einen Eingangsbereich mit einer Garderobe. In den dargestellten Umgebungskarten 3 der Figuren 2a, 2b und 2c sind definierte Umgebungsteilbereiche 5 bis 10 schraffiert dargestellt. Diese Umgebungsteilbereiche 5 bis 10 geben diejenigen Umgebungsteilbereiche 5 bis 10 an, welche bei dem in der Figur beispielhaft dargestellten Tätigkeitsszenario 12 zu bearbeiten sind. Die Figur 2a verdeutlicht ein Tätigkeitsszenario 12 "Besuch", welches ausgeführt werden soll, bevor ein Besucher die dargestellte Wohnung betritt. Sofern das Ereignis "Besuch" auftritt, sollen im Vorhinein relevante Umgebungsteilbereiche 5 bis 10 der Umgebung gereinigt werden, die üblicherweise von einem Gast betreten werden. Hierzu zählen in dem dargestellten Beispiel die Umgebungsteilbereiche 6 (Wohnzimmer), 7 (Küche), 8 (Esszimmer), 9 (Badezimmer) und 10 (Eingangsbereich/Garderobe).

Die in der Datenbank 4 hinterlegte Tabelle gemäß Figur 3 weist in den Spalten die Umgebungsteilbereiche 5 bis 10 und in den Zeilen die Ereignisse 11 auf. In dem Schnittbereich zwischen den Spalten und den Zeilen ist darüber hinaus eine Art einer auszuführenden Reinigungstätigkeit 13 angegeben, nämlich hier beispielsweise Trockenreinigung, Nassreinigung oder sowohl Trockenreinigung, als auch Nassreinigung. Die Ereignisse 11 umfassen hier einen Besuch, ein Besuchsende, die Anwesenheit eines Haustiers, die Anwesenheit von Kindern, eine Kochtätigkeit, einen Pollenflug sowie Ereignisse, die grundsätzlich eine Reinigungstätigkeit 13 in allen Umgebungsteilbereichen 5 bis 10 umfassen, und eine Variante, bei welcher nur der Eingangsbereich und das Wohnzimmer für eine Spotreinigung vorgesehen sein sollen.

Die Erfindung gemäß einer möglichen Ausführungsform funktioniert nun so, dass der Nutzer des Reinigungssystems zunächst die in der Figur 3 dargestellten Ereignisse 11 definiert, welche ein Tätigkeitsszenario 12 auslösen sollen. Hierzu greift der Nutzer auf die Datenbank 4 zu und legt die dargestellte Tabelle an, wobei er in eine der Zeilen beispielhaft einträgt, dass im Falle des Ereignisses 11 "Besuch" die Umgebungsteilbereiche 6, 7, 8, 9, 10 gereinigt werden sollen. Der Umgebungsteilbereich 5 (Schlafzimmer) soll hingegen nicht gereinigt werden, da dieser üblicherweise von Gästen nicht betreten wird. Neben den Umgebungsteilbereichen 6, 7, 8, 9, 10 legt der Nutzer zudem fest, welche Reinigungstätigkeiten 13 in diesen Umgebungsteilbereichen 6, 7, 8, 9, 10 ausgeführt werden sollen. Hier sind dies sowohl eine Trockenreinigung, als auch eine Nassreinigung. Obwohl dies hier nicht dargestellt ist, kann der Nutzer zudem ebenfalls in der Tabelle hinterlegen, welches der Reinigungsgeräte 1, 2 für eine Reinigungstätigkeit 13 benutzt werden soll. Hier könnte der Nutzer definieren, dass die Trockenreinigung durch das Reinigungsgerät 1 ausgeführt werden soll, und dass die Nassreinigung durch das Reinigungsgerät 2 ausgeführt werden soll. Sofern der Nutzer diese Zuweisung von Reinigungsgeräten 1, 2 nicht bereits in der Datenbank 4 speichert, kann später, wenn das Ereignis 11 eintritt, beispielsweise eine automatische Zuweisung von Reinigungstätigkeiten 13 zu den Reinigungsgeräten 1, 2 durch die Steuereinrichtung 15 des Reinigungssystems durchgeführt werden. Eine solche Zuordnung zwischen Umgebungsteilbereichen 5 bis 10 und Reinigungstätigkeiten 13 kann der Nutzer für eine Vielzahl von selbst definierten Ereignissen 11 vornehmen. Nachdem der Nutzer die Tätigkeitsszenarien 12 mit zugehörigen Umgebungsteilbereichen 5 bis 10 und Reinigungstätigkeiten 13, sowie gegebenenfalls Reinigungsgeräte 1, 2, definiert hat, liegt die beispielhaft in Figur 3 dargestellte Tabelle vor. Die Tabelle ist somit in der Datenbank 4 gespeichert und kann von der Steuereinrichtung 15 ausgelesen werden.

Wenn der Nutzer nun wie in Figur 1 dargestellt Kenntnis von einem sich ankündigenden Besuch erlangt, beispielsweise durch ein Telefongespräch, teilt er das Ereignis 11 "Besuch kommt" mit, indem er in die auf seinem Endgerät 19 installierte Applikation einen entsprechenden Text eingibt oder aber ein dafür vorgesehenes Schaltfeld drückt, das mit dem zugehörigen Tätigkeitsszenario 12 "Besuch" verknüpft ist. Das Endgerät 19 übermittelt das Ereignis 11 mittels drahtloser Kommunikation an die Steuereinrichtung 15 des Reinigungssystems, welche daraufhin auf die Datenbank 4 zugreift und aus den dort gespeicherten Tätigkeitsszenarien 12 dasjenige auswählt, welches für das Ereignis 11 "Besuch" definiert ist. Sofern die Datenbank 4 noch keine Angabe darüber enthält, welches Reinigungsgerät 1, 2 welche Reinigungstätigkeit 13 des zu dem Ereignis 11 definierten Tätigkeitsszenarios 12 ausführen soll, ermittelt die Steuereinrichtung 15 ad hoc, welches Reinigungsgerät 1, 2 für die in dem Tätigkeitsszenario 12 enthaltenen Reinigungstätigkeiten 13 geeignet und verfügbar ist. Dazu kann die Datenbank 4 ebenfalls Angaben darüber enthalten, welche Reinigungsgeräte 1, 2 des Reinigungssystems aktuell verfügbar sind, welche Reinigungsparameter diese ausführen können, beispielsweise ob es sich bei dem jeweiligen Reinigungsgerät 1, 2 um ein Sauggerät oder ein Wischgerät handelt, welche Reinigungselemente 17 dem Reinigungsgerät 1, 2 zur Verfügung stehen, welchen Ladezustand der Akkumulator des jeweiligen Reinigungsgerätes 1, 2 hat, wie groß die maximale Bearbeitungsgeschwindigkeit des Reinigungsgerätes 1, 2 ist und ähnliche Parameter. Sodann steuert die Steuereinrichtung 15 die Abfolge von Reinigungstätigkeiten 13, die in dem Tätigkeitsszenario 12 "Besuch" definiert sind, wobei hintereinander, oder hier bevorzugt auch gleichzeitig, sowohl eine Reinigungstätigkeit 13 des ersten Reinigungsgerätes 1, als auch eine Reinigungstätigkeit 13 des zweiten Reinigungsgerätes 2 ausgeführt werden können, wobei das erste Reinigungsgerät 1, welches als Saugroboter ausgebildet ist, jedoch zunächst einen zeitlichen Vorsprung zu einer Reinigungstätigkeit 13 des zweiten, als Wischgerät ausgebildeten Reinigungsgerätes 2 benötigt. Grundsätzlich kann die Steuereinrichtung 15 anhand der vorliegenden Angaben über die zu reinigenden Umgebungsteilbereiche 5 bis 10, die darin auszuführenden Reinigungstätigkeiten 13 und die zur Verfügung stehenden Reinigungsgeräte 1, 2 eine sinnvolle, d.h. insbesondere zeit- und ressourcensparende, Reihenfolge der Reinigungstätigkeiten 13 der Reinigungsgeräte 1, 2 festlegen. Dies kann beinhalten, dass die Steuereinrichtung 15 nach einem systemseitigen oder von dem Nutzer vorgegebenen Regelwerk agiert, welches den Umgebungsteilbereichen 5 bis 10 eine definierte Rangfolge innerhalb des Tätigkeitsszenarios 12 zuweist. Dabei kann ein solcher Umgebungsteilbereich 5 bis 10 einen höchsten Rang erhalten (und somit zuerst gereinigt werden), welcher nicht nur im Rahmen des ereignisdefinierten Tätigkeitsszenarios 12 gereinigt werden soll, sondern vielmehr auch regelmäßig oder unregelmäßig nach einem vordefinierten Zeitplan gereinigt wird. Bei einem solchen Zeitplan kann es sich beispielsweise um einen persönlichen Terminkalender des Nutzers handeln, in welchem Termine für eine Reinigung eines bestimmten Umgebungsteilbereiches 5 bis 10 gespeichert sind. Beispielsweise kann der Nutzer über sein Endgerät 19 und die darauf installierte Applikation festlegen, dass die Küche (Umgebungsteilbereich 7) jeden Tag um 19:00 Uhr gesaugt und gewischt werden soll. Die Steuereinrichtung 15 des Reinigungssystems kann somit bei der Bestimmung einer Reihenfolge für die Reinigungstätigkeiten 13 des ereignisabhängigen Tätigkeitsszenarios 12 prüfen, welcher der Umgebungsteilbereiche 5 bis 10 ebenfalls Ausführungsort für eine zeitabhängig geplante Reinigungstätigkeit 13 ist. Beispielsweise kann die Steuereinrichtung 15 ermitteln, dass der Umgebungsteilbereich 7 (Küche) sowohl regelmäßig jeden Tag um 19:00 Uhr gereinigt wird, als auch im Rahmen des nun angeforderten Tätigkeitsszenarios 12 bearbeitet werden soll. Sodann entscheidet die Steuereinrichtung 15, dass der "doppelt angeforderte" Umgebungsteilbereich 7 bevorzugt zu reinigen ist, d.h. vor den übrigen Umgebungsteilbereichen 6, 8, 9, 10. Einen höchsten Rang könnte darüber hinaus alternativ auch ein solcher Umgebungsteilbereich 5 bis 10 erhalten, welcher für mehrere ereignisabhängige Tätigkeitsszenarien 12 definiert ist, nämlich beispielsweise im Falle des Ereignisses 11 "Besuch" gereinigt werden soll, und zudem im Falle des Ereignisses 11 "Kochen" oder dergleichen. In dem Fall kann das Regelwerk beispielsweise vorsehen, dass der Umgebungsteilbereich 7 vor den anderen Umgebungsteilbereichen 6, 8, 9, 10 zu reinigen ist. In der Datenbank 4 können zudem Rangfolgen für den Fall hinterlegt sein, dass mehrere Ereignisse 11 gleichzeitig eintreten beziehungsweise aktiv sind, zu welchen ein Tätigkeitsszenario 12 gespeichert ist. Dadurch wird entschieden, welches der auszuführenden Tätigkeitsszenarien 12 vorrangig ausgeführt werden soll. Beispielsweise kann einerseits das Ereignis 11 "Besuch" und andererseits das Ereignis 11 "Pollenflug" eintreten. Das Regelwerk kann die Regel enthalten, dass stets solche Tätigkeitsszenarien 12 ausgeführt werden sollen, an welchen Personen beteiligt sind. Im vorliegenden Fall ist dies das Tätigkeitsszenario 12 "Besuch", so dass dieses vor dem Tätigkeitsszenario 12 "Pollenflug" ausgeführt wird. Alternativ wäre es ebenso auch möglich, dass definiert ist, dass beide Tätigkeitsszenarien 12 gleichzeitig ausgeführt werden, oder dass die darin enthaltenen Reinigungstätigkeiten 13, sofern doppelt vorhanden, zu einer einzigen Reinigungstätigkeit 13 zusammengeführt werden.

Gemäß einer alternativen Ausführungsform der Erfindung kann vorgesehen sein, dass das Ereignis 11 dem Reinigungssystem nicht manuell durch den Nutzer mitgeteilt wird, sondern vielmehr mittels einer Detektionseinrichtung 14 des Reinigungssystems detektiert wird, hier nämlich beispielsweise mittels der Detektionseinrichtung 14 eines der Reinigungsgeräte 1, 2. Beispielsweise kann das Reinigungsgerät 1, 2 als Ereignis 11 eine Anwesenheit von Personen und/ oder Tieren in einem oder mehreren Umgebungsteilbereichen 5 bis 10 detektieren, das Auftreten einer Verschmutzung in einem Umgebungsteilbereich 5 bis 10, die Aktivität eines Küchengerätes in dem Umgebungsteilbereich 7 (Küche) und dergleichen. Das Reinigungsgerät 1, 2 übermittelt die Angabe des detektierten Ereignisses 11 daraufhin an die Steuereinrichtung 15 des Reinigungssystems. Gegebenenfalls kann das Reinigungsgerät 1, 2 des Weiteren eine von ihm selbst erstellte Umgebungskarte 3, weitere Informationen über beispielsweise eine in dem jeweiligen Umgebungsteilbereich 5 bis 10 detektierte Bodenart oder andere Informationen übermitteln. Sodann steuert die Steuereinrichtung 15 des Reinigungssystems, wie zuvor in Bezug auf das erste Ausführungsbeispiel beschrieben, die Ausführung des zu dem Ereignis 11 definierten Tätigkeitsszenarios 12. Wenn beispielsweise die Anwesenheit eines Haustiers detektiert wurde, liegt das Ereignis 11 "Haustier" vor und die Steuereinrichtung 15 ermittelt zu diesem Ereignis 11 das definierte Tätigkeitsszenario 12 und steuert die im Rahmen dieses Tätigkeitsszenarios 12 auszuführenden Reinigungstätigkeiten 13.

### Liste der Bezugszeichen

- 1: Reinigungsgerät
- 2: Reinigungsgerät
- 3: Umgebungskarte
- 4: Datenbank
- 5: Umgebungsteilbereich
- 6: Umgebungsteilbereich
- 7: Umgebungsteilbereich
- 8: Umgebungsteilbereich
- 9: Umgebungsteilbereich
- 10: Umgebungsteilbereich
- 11: Ereignis
- 12: Tätigkeitsszenario
- 13: Reinigungstätigkeit
- 14: Detektionseinrichtung
- 15: Steuereinrichtung
- 16: Rad
- 17: Reinigungselement
- 18: Navigationseinrichtung
- 19: Endgerät

## Patentansprüche

1. Verfahren zum Betrieb eines Reinigungssystems, welches zumindest ein sich selbsttätig fortbewegendes Reinigungsgerät (1, 2) aufweist, wobei sich das Reinigungsgerät (1, 2) in einer Umgebung auf der Basis einer Umgebungskarte (3) fortbewegt und dort Reinigungstätigkeiten (13) ausführt, wobei das Reinigungsgerät (1, 2) auf eine Datenbank (4) zugreift, in welcher mehrere in zumindest einem Umgebungsteilbereich (5 - 10) der Umgebung auszuführende Reinigungstätigkeiten (13) gespeichert sind, wobei ein Nutzer auf die Datenbank (4) zugreift und im Voraus zumindest ein zufällig eintretendes, einen Reinigungszustand zumindest eines Umgebungsteilbereiches (5 - 10) veränderndes Ereignis (11) definiert, in Abhängigkeit von dessen Eintreten zumindest eine bestimmte Reinigungstätigkeit (13) in zumindest einem bestimmten Umgebungsteilbereich (5 - 10) ausgeführt werden soll, wobei der Nutzer zu dem definierten Ereignis im Voraus, nämlich vor Eintreten des Ereignisses, ein ereignisabhängiges Tätigkeitsszenario (12) definiert, welches eine festgelegte Zuordnung einer bestimmten auszuführenden Reinigungstätigkeit (13) zu einem bestimmten Umgebungsteilbereich (5 - 10), in welchem die Reinigungstätigkeit (13) ausgeführt werden soll, enthält, und wobei das Tätigkeitsszenario (12) bei späterem Eintreten des definierten Ereignisses von zumindest einem Reinigungsgerät (1, 2) ausgeführt wird, **dadurch gekennzeichnet, dass** das Eintreten des definierten Ereignisses (11) mittels einer Detektionseinrichtung (14) detektiert und dem System automatisch mitgeteilt wird, wobei eine Steuereinrichtung (15) des Systems ein zu dem mitgeteilten Ereignis (11) definiertes Tätigkeitsszenario (12) aus der Datenbank (4) abruft und die Ausführung der zumindest einen davon umfassten Reinigungstätigkeit (13) steuert, wobei der Nutzer eine Zuordnung bestimmter Detektionseinrichtungen (14) zu definierten Tätigkeitsszenarien (12) festlegt, wobei für jedes Tätigkeitsszenario (12) bestimmt wird, mittels welcher Detektionseinrichtung (14) das Auftreten eines definierten Ereignisses (11) ermittelt wird, und wobei zusätzlich zu dem definierten ereignisabhängigen Tätigkeitsszenario (12) zumindest eine Reinigungstätigkeit (13) auch zeitabhängig geplant wird, wobei in dem Fall, dass ein Zeitpunkt eines Auftretens eines definierten Ereignisses (11) einen vorbestimmten zeitlichen Mindestabstand zu einem definierten Zeitpunkt zur Ausführung der zeitabhängig geplanten Reinigungstätigkeit (13) für denselben Umgebungsteilbereich (5 - 10) unterschreitet, nach vordefinierten Regeln entschieden wird, ob nur das ereignisabhängige Tätigkeitsszenario (12) oder nur die zeitabhängig geplante Reinigungstätigkeit (13) ausgeführt wird.

2. Verfahren nach Anspruch 1, **dadurch gekennzeichnet, dass** das Tätigkeitsszenario (12) eine Angabe über ein Reinigungsgerät (1, 2), von welchem die Reinigungstätigkeit (13) ausgeführt werden soll, enthält.

3. Verfahren nach einem der vorhergehenden Ansprüche, **dadurch gekennzeichnet, dass** mehrere ereignisabhängige Tätigkeitsszenarien (12) mit einer definierten Rangfolge zueinander gewichtet werden, wobei in dem Fall, dass mehrere definierte Ereignisse (11) gleichzeitig eintreten, dasjenige Tätigkeitsszenario (12) zuerst ausgeführt wird, welches einen höchsten Rang aufweist, wobei insbesondere einem solchen Tätigkeitsszenario (12) ein höchster Rang zugeordnet wird, welches für ein Ereignis (11) definiert ist, das eine Beteiligung einer Person und/oder eines Tieres beinhaltet.

4. Verfahren nach einem der vorhergehenden Ansprüche, **dadurch gekennzeichnet, dass** mehrere Umgebungsteilbereiche (5-10), welche im Rahmen desselben ereignisabhängigen Tätigkeitsszenarios (12) gereinigt werden sollen, mit einer definierten Rangfolge zueinander gewichtet werden, wobei der Umgebungsteilbereich (5 - 10) mit höchstem Rang zuerst gereinigt wird, wobei demjenigen Umgebungsteilbereich (5 - 10) ein höchster Rang zugeordnet wird, welcher zusätzlich zu dem ereignisabhängigen Tätigkeitsszenario (12) auch Ausführungsort für eine zeitabhängig geplante Reinigungstätigkeit (13) ist, und wobei insbesondere einem solchen Umgebungsteilbereich (5 - 10) ein höchster Rang zugeordnet wird, der für eine zeitabhängig geplante Reinigungstätigkeit (13) zu einem früheren Zeitpunkt eingeplant ist.

5. Verfahren nach einem der vorhergehenden Ansprüche, **dadurch gekennzeichnet, dass** ein solcher Umgebungsteilbereich (5 - 10) vorrangig bearbeitet wird, welcher für mehrere ereignisabhängige Tätigkeitsszenarien (12) und/oder für sowohl ein ereignisabhängiges Tätigkeitsszenario (12), als auch eine zeitabhängig geplante Reinigungstätigkeit (13) eingeteilt ist.

6. Verfahren nach einem der vorhergehenden Ansprüche, **dadurch gekennzeichnet, dass** das Auftreten eines definierten Ereignisses (11) maschinell mittels einer Detektionseinrichtung (14) des Reinigungsgerätes (1, 2) oder mittels einer zu dem Reinigungsgerät (1, 2) externen Detektionseinrichtung (14) detektiert wird, wobei das Ereignis ausgewählt ist aus der Gruppe: Anwesenheit von Personen und/oder Tieren in zumindest einem Umgebungsteilbereich (5 - 10), Auftreten einer Verschmutzung in zumindest einem Umgebungsteilbereich (5 - 10), Beginn einer eine Verschmutzung hervorrufenden Tätigkeit einer Person, Auftreten eines Umwelt- und/oder Wetterereignisses, Auftreten einer Luftverschmutzung und/oder Pollenbelastung oberhalb eines definierten Grenzwertes, Auftreten eines akustischen Signals in zumindest einem Umgebungsteilbereich (5 - 10), Aktivität eines elektrischen Verbrauchers und/oder eines elektrischen Schaltelementes in zumindest einem Umgebungsteilbereich (5 - 10).

7. Verfahren nach einem der vorhergehenden Ansprüche, **dadurch gekennzeichnet, dass** in der Umgebungskarte (3) und/oder der Datenbank (4) zu jedem Umgebungsteilbereich (5 - 10) eine Angabe über eine in dem Umgebungsteilbereich (5 - 10) zu reinigende Bodenart und/oder eine Angabe über ein für die Reinigung vorgesehenes Reinigungsgerät (1, 2) gespeichert wird.

8. Verfahren nach einem der vorhergehenden Ansprüche, **dadurch gekennzeichnet, dass** bei der Entscheidung darüber, welche Reinigungstätigkeit (13) in dem betreffenden Umgebungsteilbereich (5 - 10) ausgeführt wird, zusätzlich eine oder mehrere weitere Parameter berücksichtigt werden, ausgewählt aus der Gruppe: ein Zeitpunkt und/oder eine Art einer zuletzt ausgeführten Reinigungstätigkeit (13) in dem betreffenden Umgebungsteilbereich (5 - 10), eine Anzahl der in der Umgebung anwesenden Personen und/oder Tiere, eine in dem Umgebungsteilbereich (5 - 10) auftretende übliche Schmutzmenge, eine Reinigung des Umgebungsteilbereiches (5 - 10) durch ein manuell geführtes Reinigungsgerät (1, 2).

## Claims

1. A method for operating a cleaning system that comprises at least one selftraveling cleaning device (1, 2), wherein the cleaning device (1, 2) travels in an environment based on an environment map (3) and carries out cleaning activities (13) in said environment, wherein the cleaning device (1, 2) accesses a database (4), in which multiple cleaning activities (13) to be carried out in at least one environment section (5-10) of the environment are stored, wherein a user accesses the database (4) and defines in advance at least one randomly occurring event (11), which changes a cleaning status of at least one environment section (5-10) and in dependence on the occurrence of which at least one certain cleaning activity (13) should be carried out in at least one certain environment section (5-10), wherein the user defines an event-dependent activity scenario (12) for the defined event in advance, namely before the occurrence of the event, wherein said activity scenario contains a defined allocation of a certain cleaning activity (13) to be carried out to a certain environment section (5-10), in which the cleaning activity (13) should be carried out, and wherein the activity scenario (12) is carried out by at least one cleaning device (1, 2) upon the subsequent occurrence of the defined event, **characterized in that** the occurrence of the defined event (11) is detected by means of a detection device (14) in order to inform the system automatically, wherein a control unit (15) of the system retrieves a defined activity scenario (12) for the event (11), from the database (4) and controls the implementation of the at least one cleaning activity (13) contained in this activity scenario, wherein the user determines an assignment of certain detection devices (14) to defined activity scenarios (12), wherein for each activity scenario (12) it is determined by means of which detection device (14) the occurrence of a defined event (11) is determined, and wherein at least one cleaning activity (13) is also scheduled time-dependently in addition to the defined event-dependent activity scenario (12), wherein it is decided in accordance with predefined rules whether only the event-dependent activity scenario (12) or only the time-dependently scheduled cleaning activity (13) is carried out in case the time of an occurrence of a defined event (11) falls short of a predefined minimum time interval from a defined time for carrying out the time-dependently scheduled cleaning activity (13) for the same environment section (5-10).

2. The method according to claim 1, **characterized in that** the activity scenario (12) contains information on a cleaning device (1, 2), by means of which the cleaning activity (13) should be carried out.

3. The method according to one of the preceding claims, **characterized in that** multiple event-dependent activity scenarios (12) are weighted relative to one another with a defined ranking, wherein the activity scenario (12) with the highest rank is carried out first in case multiple defined events (11) occur simultaneously, and wherein the highest rank particularly is assigned to an activity scenario (12) that is defined for an event (11) involving a person and/or an animal.

4. The method according to one of the preceding claims, **characterized in that** multiple environment sections (5-10), which should be cleaned in the course of the same event-dependent activity scenario (12), are weighted relative to one another with a defined ranking, wherein the environment section (5-10) with the highest rank is cleaned first, wherein the highest rank is assigned to the environment section (5-10), which in addition to the event-dependent activity scenario (12) is also the location for carrying out a time-dependently scheduled cleaning activity (13), and wherein the highest rank particularly is assigned to an environment section (5-10) that is scheduled for a time-dependent cleaning activity (13) at an earlier time.

5. The method according to one of the preceding claims, **characterized in that** an environment section (5-10), which is scheduled for multiple event-dependent activity scenarios (12) and/or for an event-dependent activity scenario (12) as well as a time-dependent cleaning activity (13), is treated with priority.

6. The method according to one of the preceding claims, **characterized in that** the occurrence of a defined event (11) is detected in a machine-assisted manner by means of a detection device (14) of the cleaning device (1, 2) or by means of a detection device (14) arranged externally of the cleaning device (1, 2), wherein the event is selected from the following group: presence of persons and/or animals in at least one environment section (5-10), occurrence of a dirt accumulation in at least one environment section (5-10), start of an activity of a person that causes a dirt accumulation, occurrence of an environmental and/ or weather event, occurrence of an air pollution and/or pollen count above a defined limiting value, occurrence of an acoustic signal in at least one environment section (5-10) and activity of an electrical consumer and/or an electrical switching element in at least one environment section (5-10).

7. The method according to one of the preceding claims, **characterized in that** information on a floor type to be cleaned in the environment section (5-10) and/or information on a cleaning device (1, 2) to be used is stored for each environment section (5-10) in the environment map (3) and/or in the database (4).

8. The method according to one of the preceding claims, **characterized in that** one or more additional parameters is f are taken into account in the decision on which cleaning activity (13) is carried out in the respective environment section (5-10), wherein said parameter or parameters is/are selected from the following group: a time and/or type of a cleaning activity (13) carried out most recently in the respective environment section (5-10), a number of the persons and/or animals present in the environment, a usual dirt quantity occurring in the environment section (5-10) and cleaning of the environment section (5-10) by means of a manually operated cleaning device (1, 2).

## Revendications

1. Procédé d'exploitation d'un système de nettoyage, qui présente au moins un appareil de nettoyage (1, 2) se déplaçant automatiquement, l'appareil de nettoyage (1, 2) se déplaçant dans un environnement sur la base d'une carte d'environnement (3) et y exécutant des activités de nettoyage (13), l'appareil de nettoyage (1, 2) accédant à une banque de données (4), dans laquelle sont enregistrées plusieurs activités de nettoyage (13) à exécuter dans au moins une zone partielle d'environnement (5-10) de l'environnement, un utilisateur accédant à la base de données (4) et définissant à l'avance au moins un événement (11) survenant de manière aléatoire et modifiant un état de nettoyage d'au moins une zone partielle d'environnement (5-10), en fonction de la survenance de cet événement, au moins une activité de nettoyage (13) déterminée doit être exécutée dans au moins une zone partielle d'environnement (5-10) déterminée, l'utilisateur définissant à l'avance, à savoir avant la survenance de l'événement, un scénario d'activité (12) dépendant de l'événement pour l'événement défini, qui contient une affectation déterminée d'une certaine activité de nettoyage (13) à exécuter à une certaine zone partielle d'environnement (5-10) dans laquelle l'activité de nettoyage (13) doit être exécutée, et le scénario d'activité (12) étant exécuté par au moins un appareil de nettoyage (1, 2), **caractérisé en ce que** la survenance de l'événement défini (11) est détectée au moyen d'un dispositif de détection (14) et est communiquée automatiquement au système, un dispositif de commande (15) du système appelant de la base de données (4) un scénario d'activité (12) défini pour l'événement communiqué (11) et commandant l'exécution de l'au moins une activité de nettoyage (13) comprise dans celui-ci, l'utilisateur définissant une association de certains dispositifs de détection (14) à des scénarios d'activité (12) définis, en déterminant pour chaque scénario d'activité (12) au moyen de quel dispositif de détection (14) l'apparition d'un événement (11) défini est déterminée, et dans lequel, en plus du scénario d'activité défini (12) dépendant de l'événement, au moins une activité de nettoyage (13) est également planifiée en fonction du temps, dans lequel, dans le cas où un moment d'une apparition d'un événement défini (11) est inférieur à un écart temporel minimal prédéterminé par rapport à un moment défini pour l'exécution de l'activité de nettoyage (13) planifiée en fonction du temps pour la même zone partielle d'environnement (5-10), il est décidé selon des règles prédéfinies si seul le scénario d'activité (12) dépendant de l'événement ou seule l'activité de nettoyage (13) planifiée en fonction du temps est exécuté.

2. Procédé selon la revendication 1, **caractérisé en ce que** le scénario d'activité (12) contient une indication concernant un appareil de nettoyage (1, 2) à partir duquel l'activité de nettoyage (13) doit être exécutée.

3. Procédé selon l'une des revendications précédentes, **caractérisé en ce que** plusieurs scénarios d'activité (12) dépendant d'événements sont pondérés les uns par rapport aux autres avec un classement défini, dans lequel, dans le cas où plusieurs événements définis (11) se produisent simultanément, le scénario d'activité (12) qui présente un classement le plus élevé est exécuté en premier, un classement le plus élevé étant notamment attribué à un tel scénario d'activité (12) qui est défini pour un événement (11) qui implique la participation d'une personne et/ou d'un animal.

4. Procédé selon l'une des revendications précédentes, **caractérisé en ce que** plusieurs zones partielles d'environnement (5-10), qui doivent être nettoyées dans le cadre du même scénario d'activité (12) dépendant d'un événement, sont pondérées les unes par rapport aux autres avec un ordre de priorité défini, la zone partielle d'environnement (5-10) ayant le rang le plus élevé étant nettoyée en premier, un rang le plus élevé étant attribué à cette zone partielle d'environnement (5-10), qui, en plus du scénario d'activité (12) dépendant de l'événement, est également le lieu d'exécution d'une activité de nettoyage (13) planifiée en fonction du temps, et un rang le plus élevé étant notamment attribué à une telle zone partielle d'environnement (5-10) qui est planifiée à un moment antérieur pour une activité de nettoyage (13) planifiée en fonction du temps.

5. Procédé selon l'une des revendications précédentes, **caractérisé en ce qu'**une telle zone partielle d'environnement (5-10) est traitée en priorité, laquelle est divisée pour plusieurs scénarios d'activité (12) dépendant d'un événement et/ou pour aussi bien un scénario d'activité (12) dépendant d'un événement qu'une activité de nettoyage (13) planifiée en fonction du temps.

6. Procédé selon l'une des revendications précédentes, **caractérisé en ce que** l'apparition d'un événement défini (11) est détectée mécaniquement au moyen d'un dispositif de détection (14) de l'appareil de nettoyage (1, 2) ou au moyen d'un dispositif de détection (14) externe à l'appareil de nettoyage (1, 2), l'événement étant choisi dans le groupe: présence de personnes et/ou d'animaux dans au moins une zone partielle d'environnement (5-10), apparition d'une pollution dans au moins une zone partielle d'environnement (5-10), début d'une activité d'une personne provoquant une pollution, apparition d'un événement environnemental et/ou météorologique, apparition d'une pollution atmosphérique et/ou d'une charge de pollen supérieure à une valeur limite définie, apparition d'un signal acoustique dans au moins une zone partielle d'environnement (5-10), activité d'un consommateur électrique et/ou d'un élément de commutation électrique dans au moins une zone partielle d'environnement (5-10).

7. Procédé selon l'une des revendications précédentes, **caractérisé en ce que**, dans la carte d'environnement (3) et/ou la base de données (4), on enregistre pour chaque zone partielle d'environnement (5-10) une indication sur un type de sol à nettoyer dans la zone partielle d'environnement (5-10) et/ou une indication sur un appareil de nettoyage (1, 2) prévu pour le nettoyage.

8. Procédé selon l'une des revendications précédentes, **caractérisé en ce que**, pour décider quelle activité de nettoyage (13) doit être exécutée dans la zone partielle d'environnement (5-10) concernée, on prend en outre en compte un ou plusieurs autres paramètres, choisis dans le groupe: un moment et/ou un type d'une activité de nettoyage (13) exécutée en dernier lieu dans la zone partielle d'environnement (5-10) concernée, un nombre de personnes et/ou d'animaux présents dans l'environnement, une quantité habituelle de saletés apparaissant dans la zone partielle d'environnement (5-10), un nettoyage de la zone partielle d'environnement (5-10) par un appareil de nettoyage (1, 2) guidé manuellement.
